# EUROPEAN PATENT APPLICATION

(11) **EP 4 822 796 A1**
(43) Date of publication of application: **14.10.2026**
(21) Application number: 23960831.8
(22) Date of filing: 07.12.2023
(51) Int. Cl.: H01M 10/052, H01M 4/66, H01M 50/46

(54) **LITHIUM SECONDARY BATTERY AND METHOD FOR MANUFACTURING LITHIUM SECONDARY BATTERY**

(71) Applicant: TERAWATT TECHNOLOGY K.K., Yokohama-shi, Kanagawa 226-0026 (JP)
(72) Inventor: KAJIKAWA, Tetsushi, Yokohama-shi, Kanagawa 226-0026 (JP); OYAMA, Gosuke, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/043892
(87) International publication number: WO 2025/120819

(57) **Abstract**

The present invention provides a lithium secondary battery that achieves weight reduction, cost reduction, and a favorable capacity retention rate, and provides a method for manufacturing the lithium secondary battery. The present invention relates to a lithium secondary battery including: a positive electrode; a separator; and a negative electrode including a negative electrode current collector and a negative-electrode active material layer on the negative electrode current collector, in which the negative electrode current collector includes a resin layer and metal layers provided on both surfaces of the resin layer, the negative-electrode active material layer faces the positive electrode with the separator being interposed between the negative-electrode active material layer and the positive electrode, the separator includes an adhesive layer on a surface on a side of the negative electrode, a peel strength x between the resin layer and the metal layer at 25°C is 0.05 N/cm or more, and a peel strength y between the negative-electrode active material layer and the separator at 25°C satisfies x < y.

## Description

### Technical Field

The present invention relates to a lithium secondary battery and a method for manufacturing a lithium secondary battery.

### Background Art

In recent years, a technique of converting natural energy such as sunlight or wind power into electrical energy has attracted attention. In addition, with the spread of devices that utilize electrical energy, such as electric vehicles, various secondary batteries have been developed as power storage devices that are lightweight and can store a large amount of electrical energy.

Among these, it is known that a lithium secondary battery that performs charging/discharging by moving lithium ions between a positive electrode and a negative electrode exhibits a high voltage and a high energy density.

For example, Patent Literature 1 discloses a current collector in which a metal layer is formed on both surfaces of a resin layer.

### Citation List

### Patent Literature

Patent Literature 1: Japanese Patent Application Laid-Open No. H11-102711

### Summary of Invention

### Technical Problem

It has been found that, in a lithium secondary battery, when a current collector in which a metal layer is formed on both surfaces of a resin layer is used, a problem such as a decrease in a capacity retention rate of the battery occurs.

The present invention has been made in view of the above-described problems, and an object of the present invention is to provide a lithium secondary battery in which an increase in mass is suppressed and a capacity retention rate is improved, and to provide a method for manufacturing the lithium secondary battery.

### Solution to Problem

A lithium secondary battery according to an embodiment of the present invention includes: a positive electrode; a separator; and a negative electrode including a negative electrode current collector and a negative-electrode active material layer on the negative electrode current collector, in which the negative electrode current collector includes a resin layer and metal layers provided on both surfaces of the resin layer, the negative-electrode active material layer faces the positive electrode with the separator being interposed between the negative-electrode active material layer and the positive electrode; the separator includes an adhesive layer on a surface on a side of the negative electrode, a peel strength x between the resin layer and the metal layer at 25°C is 0.05 N/cm or more, and a peel strength y between the negative-electrode active material layer and the separator at 25°C satisfies x < y.

A method for manufacturing a lithium secondary battery according to an embodiment of the present invention includes: a negative electrode current collector preparation step of preparing a negative electrode current collector including a resin layer and metal layers provided on both surfaces of the resin layer; a negative electrode production step of producing a negative electrode by forming a negative-electrode active material layer on the negative electrode current collector; a laminate production step of producing a laminate by disposing the negative electrode, a positive electrode, and a separator so that the negative-electrode active material layer faces the positive electrode with the separator including an adhesive layer and being interposed between the negative-electrode active material layer and the positive electrode, and the adhesive layer is adjacent to the negative-electrode active material layer; and a heat press step of pressurizing the laminate while heating the laminate, in which in the lithium secondary battery, a peel strength x between the resin layer and the metal layer at 25°C is 0.05 N/cm or more, and a peel strength y between the negative-electrode active material layer and the separator at 25°C satisfies x < y.

In such a lithium secondary battery, the negative electrode current collector includes a resin layer and metal layers provided on both surfaces of the resin layer. Since such a negative electrode current collector has a lower density than a current collector including only a metal layer, the weight of the lithium secondary battery can be reduced by using such a negative electrode current collector. In addition, in the lithium secondary battery, it has been found that, when the negative-electrode active material layer faces the positive electrode with the separator being interposed between the negative-electrode active material layer and the positive electrode, the separator includes an adhesive layer on a surface on a side of the negative electrode, a peel strength x between the resin layer and the metal layer at 25°C is 0.05 N/cm or more, and a peel strength y between the negative-electrode active material layer and the separator at 25°C satisfies x < y, the lithium secondary battery has a favorable capacity retention rate. Therefore, it is presumed that each of the above-described configurations achieves both the weight reduction of the lithium secondary battery and the favorable capacity retention rate.

### Advantageous Effect of Invention

According to the present invention, it is possible to provide a lithium secondary battery that achieves both weight reduction and a favorable capacity retention rate, and to provide a method for manufacturing the lithium secondary battery.

### Brief Description of Drawings

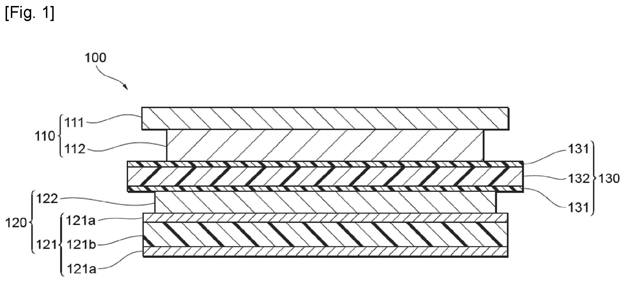

[Figure 1] Figure 1 is a schematic cross-sectional view of a lithium secondary battery according to the present embodiment.

### Description of Embodiments

Hereinafter, the embodiment of the present invention (hereinafter, referred to as "the present embodiment") will be described in detail with reference to the drawings as necessary. However, the present invention is not limited thereto, and various modifications can be made without departing from the gist of the present invention. It is noted that, in the drawings, the same elements will be represented by the same reference numerals, and redundant descriptions thereof will be omitted. In addition, the positional relationship such as up, down, left, and right is based on the positional relationship illustrated in the drawings unless otherwise specified. Furthermore, the dimensional ratios in the drawings are not limited to the ratios illustrated in the drawings.

### 1. Lithium secondary battery

The type of a lithium secondary battery 100 according to the present embodiment is not particularly limited as long as charging/discharging is performed by a redox reaction of lithium, and examples thereof include a lithium ion battery, a lithium metal battery, a lithium sulfur battery, a lithium oxygen battery, a lithium air battery, and the like.

The shape of the battery of the lithium secondary battery 100 according to the present embodiment is not particularly limited, and may be, for example, a sheet type, a laminated sheet type, or may have a thin shape, a bottomed cylindrical shape, a bottomed angular shape, or the like. From the viewpoint of more effectively and reliably exhibiting the effects of the present embodiment, a sheet type, a laminated sheet type, or a thin shape is preferable.

Hereinafter, the lithium secondary battery according to the present embodiment will be described as necessary in detail with reference to a lithium ion secondary battery as an example, which is an example of the lithium secondary battery according to the present embodiment.

### <Lithium ion secondary battery>

Figure 1 is a schematic cross-sectional view of the lithium secondary battery 100 according to the present embodiment. The lithium secondary battery 100 according to the present embodiment includes a positive electrode 110, a separator 130, and a negative electrode 120 including a negative electrode current collector 121 and a negative-electrode active material layer 122 on the negative electrode current collector 121, in which the negative electrode current collector 121 includes a resin layer 121b and metal layers 121a provided on both surfaces of the resin layer 121b, the negative-electrode active material layer 122 faces the positive electrode 110 with the separator 130 being interposed between the negative-electrode active material layer 122 and the positive electrode 110, the separator 130 includes an adhesive layer 131 on a surface on the negative electrode 120 side, a peel strength x between the resin layer 121b and the metal layer 121a at 25°C is 0.05 N/cm or more, and a peel strength y between the negative-electrode active material layer 122 and the separator 130 at 25°C satisfies x < y.

The adhesive layer 131 may be provided only on a surface of a separator body 132 on a side of the negative electrode as illustrated in Figure 1, or may be provided on both surfaces of the separator body 132.

A positive-electrode active material layer 112 may be provided on one surface of a positive electrode current collector 111 as illustrated in Figure 1, or may be provided on both surfaces of the positive electrode current collector 111. In addition, the negative-electrode active material layer 122 may be provided on one surface of the negative electrode current collector 121 as illustrated in Figure 1, or may be provided on both surfaces of the negative electrode current collector 121.

The positive electrode current collector 111 may have a single-layer structure as illustrated in Figure 1, or may have a multilayer structure including a resin layer and metal layers provided on both surfaces of the resin layer.

In addition, since the negative electrode current collector 121 contains a resin having a lower density than that of the metal, and the weight per volume thereof is reduced as compared with a current collector including only a metal layer, the lithium secondary battery 100 that uses the negative electrode current collector 121 including the resin layer 121b and the metal layers 121a provided on both surfaces of the resin layer 121b tends to have an excellent energy density per weight.

As described above, by using a current collector including a resin layer and metal layers provided on both surfaces of the resin layer as the current collector, the energy density per weight of the lithium secondary battery tends to be improved. On the other hand, when such a current collector is used, a problem such as a decrease in the capacity retention rate of the battery occurs. The factor for this is not particularly limited; however, it is presumed as follows. In a current collector including a resin layer and metal layers provided on both surfaces of the resin layer, the adhesive strength between the metal layer and the resin layer may be weak. In particular, the adhesive strength between the metal and the resin, which are used in the negative electrode current collector of the lithium secondary battery, tends to be weak. Therefore, when the negative electrode current collector includes a resin layer and metal layers provided on both surfaces of the resin layer, it is considered that peeling occurs between the resin layer and the metal layer of the negative electrode current collector due to the expansion and contraction of the lithium secondary battery, which occur when the charge/discharge cycle is repeated, and this peeling causes the generation of gaps at various locations such as a location between the positive electrode and the separator or between the negative electrode and the separator in the lithium secondary battery, and the shape of the lithium secondary battery collapses, and as a result, a problem such as a decrease in the capacity retention rate of the battery occurs.

Therefore, in the lithium secondary battery 100 according to the present embodiment, the peel strength x at 25°C between the metal layer 121a and the resin layer 121b, which constitute the negative electrode current collector 121, is defined. As a result, even when the lithium secondary battery 100 is repeatedly expanded and contracted, the peeling between the metal layer 121a and the resin layer 121b in the negative electrode current collector 121 is less likely to occur.

In addition, in the lithium secondary battery 100 according to the present embodiment, the peel strength y between the negative-electrode active material layer 122 and the separator 130 at 25°C is defined to be larger than the peel strength x at 25°C. In the negative electrode current collector 121, even when slight peeling occurs between the metal layer 121a and the resin layer 121b, it is less likely to immediately cause a significant deterioration in battery performance. However, when peeling occurs between the negative-electrode active material layer 122 and the separator 130, the movement of lithium ions in the lithium secondary battery 100 is likely to be inhibited, which leads to a deterioration in battery performance such as a decrease in the capacity retention rate. In this regard, since the peel strength y at 25°C is larger than the peel strength x at 25°C, peeling is less likely to occur between the negative-electrode active material layer 122 and the separator 130. In addition, even when peeling occurs between the metal layer 121a and the resin layer 121b, it is possible to prevent the shape of the lithium secondary battery 100 from collapsing due to the generation of gaps at various locations in the lithium secondary battery 100, which is triggered by the peeling. Therefore, it is considered that the lithium secondary battery 100 according to the present embodiment has a favorable capacity retention rate. However, the factor that the lithium secondary battery 100 according to the present embodiment has a favorable capacity retention rate is not limited to the above-described factor.

Hereinafter, respective configurations of the lithium secondary battery 100 according to the present embodiment will be respectively described in detail.

### 1.1. Negative electrode

The negative electrode 120 according to the present embodiment includes the negative electrode current collector 121 and the negative-electrode active material layer 122 on the negative electrode current collector 121.

The average thickness of the negative electrode 120 is not particularly limited; however, it is, for example, 5.0 µm or more and 120.0 µm or less. From the viewpoint of improving the capacity and/or the energy density of the battery, the average thickness thereof is preferably 20.0 µm or more and 100.0 µm or less, or 50.0 µm or more and 80.0 µm or less.

### 1.1.1. Negative electrode current collector

The negative electrode current collector 121 according to the present embodiment includes the resin layer 121b and the metal layers 121a provided on both surfaces of the resin layer. As a result, the weight reduction of the lithium secondary battery 100 according to the present embodiment can be realized, and the energy density per weight tends to be excellent. In addition, since the resin tends to be less expensive than the metal, the cost of the lithium secondary battery 100 that uses the negative electrode current collector 121 according to the present embodiment tends to be low as compared with a lithium secondary battery including only a current collector including a metal layer.

### 1.1.1.1. Metal layer

The metal constituting the metal layer 121a according to the present embodiment is not particularly limited as long as the metal can be used as a current collector, and examples thereof include copper, nickel, titanium, iron, other metals that do not react with lithium, alloys thereof, and stainless steel (SUS), among these, copper, nickel, alloys thereof, and SUS are preferable. Among these metals, from the viewpoint of redox potential, copper or SUS is preferable, and copper is more preferable. It is noted that one kind of metal may be used alone, or two or more kinds thereof may be used in combination. It is noted that, in the present specification, the "metal that does not react with lithium" means a metal that does not form an alloy by reacting with lithium ions or lithium metal under the operating conditions of the lithium secondary battery.

The content of the metal is preferably 80% by mass or more and 100% by mass or less, 90% by mass or more and 100% by mass or less, 95% by mass or more and 100% by mass or less, or 100% by mass, with respect to the total amount of the metal layer 121a. In addition, it is preferable that the metal layer 121a substantially consists of the metal.

The thickness of the metal layer 121a is preferably 0.1 µm or more and 4.0 µm or less, 0.2 µm or more and 3.5 µm or less, 0.3 µm or more and 3.3 µm or less, 0.4 µm or more and 3.0 µm or less, or 1.0 µm or more and 3.0 µm or less.

The metal layer 121a is formed on both surfaces of the resin layer 121b by vapor deposition, sputtering, plating such as electroplating, or by bonding with an adhesive, or the like. Among these, vapor deposition or plating is preferable, and plating after vapor deposition is more preferable. In this case, the metal layer 121a includes a vapor deposition layer provided on the resin layer 121b and a plating layer provided on the vapor deposition layer.

When the metal layer 121a is formed by performing plating after vapor deposition, the thickness of the vapor deposition layer formed by vapor deposition is preferably 0.07 µm or more and 0.30 µm or less, or 0.10 µm or more and 0.25 µm or less. In addition, the thickness of the plating layer formed by plating is preferably 0.50 µm or more and 2.00 µm or less, or 0.75 µm or more and 1.50 µm or less.

### 1.1.1.2. Resin layer

The resin layer 121b according to the present embodiment is an insulator, and prevents the metal layers 121a provided on both surfaces of the resin layer 121b from being electrically connected to each other. The resin constituting the resin layer 121b is not particularly limited, and may be constituted of, for example, a sheet-shape (film-shape) or fibrous resin. The resin is not particularly limited, and examples thereof include a polyolefin resin such as polypropylene (PP) or polyethylene (PE); a thermoplastic resin such as polystyrene, polyvinyl chloride, or polyamide; and polyethylene terephthalate (PET). Among these, PP or PE is preferable, and PP is more preferable. PP tends to have more excellent stability with respect to the electrolyte solution of the lithium secondary battery. When PP is used as the resin constituting the resin layer 121b, it is preferable to use copper as a metal constituting the metal layer 121a. One kind of resin may be used alone, or two or more kinds thereof may be used in combination.

The resin layer 121b may appropriately contain other additives in addition to the above-described resin, depending on the desired physical properties. The other additives are not particularly limited, and examples thereof include a colorant, a flame retardant, a surfactant, and the like.

The content of the resin is not particularly limited, and may be, for example, 60% by mass or more and 100% by mass or less, may be 80% by mass or more and 100% by mass or less, may be 90% by mass or more and 100% by mass or less, may be 95% by mass or more and 100% by mass or less, or may be 100% by mass with respect to the total amount of the resin layer 121b. In addition, the resin layer 121b may substantially consist of the resin.

The thickness of the resin layer 121b is preferably 1 µm or more and 10 µm or less, 2 µm or more and 9 µm or less, or 3 µm or more and 8 µm or less.

### 1.1.2. Negative-electrode active material layer

The negative-electrode active material layer 122 according to the present embodiment contains a negative-electrode active material. The negative-electrode active material is a material that causes an electrode reaction, that is, an oxidation reaction and a reduction reaction, in the negative electrode. Specifically, examples of the negative-electrode active material according to the present embodiment include a lithium metal and a host material for a lithium element (lithium ion or lithium metal). The host material for a lithium element means a material provided to hold a lithium ion or a lithium metal in the negative electrode. Examples of such a holding mechanism include intercalation, alloying, and occlusion of a metal cluster, and the like, and typically, the holding mechanism is intercalation.

The negative-electrode active material is not particularly limited, and examples thereof include a lithium metal, an alloy containing a lithium metal, a carbon-based substance, a metal oxide, a metal to be alloyed with lithium, an alloy containing the metal, and the like. The carbon-based substance is not particularly limited, and examples thereof include artificial graphite, graphene, graphite, hard carbon, carbon nanotube, and the like. The metal oxide is not particularly limited, and examples thereof include a titanium oxide-based compound, a cobalt oxide-based compound, and the like. The metal to be alloyed with lithium is not particularly limited, and examples thereof include silicon, germanium, tin, lead, aluminum, and gallium. One kind of negative-electrode active material may be used alone, or two or more kinds thereof may be used in combination.

The content of the negative-electrode active material is preferably 60.0% by mass or more and 100% by mass or less, 70.0% by mass or more and 99.5% by mass or less, or 80.0% by mass or more and 99.0% by mass or less with respect to the total amount of the negative-electrode active material layer 122.

The negative-electrode active material layer 122 may contain a binder, a conductive auxiliary agent, and other additives, in addition to the negative-electrode active material.

The binder is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; a polyimide resin; and the like. One kind of binder may be used alone, or two or more kinds thereof may be used in combination.

The content of the binder is preferably 0.5% by mass or more and 10.0% by mass or less, 0.7% by mass or more and 8.0% by mass or less, 1.0% by mass or more and 6.0% by mass or less, or 1.0% by mass or more and 4.0% by mass or less with respect to the total amount of the negative-electrode active material layer 122.

The conductive auxiliary agent is not particularly limited, and examples thereof include carbon black, single-wall carbon nanotube (SWCNT), multi-wall carbon nanotube (MWCNT), carbon nanofiber (CF), and acetylene black. One kind of conductive auxiliary agent may be used alone, or two or more kinds thereof may be used in combination.

The content of the conductive auxiliary agent is preferably 0.5% by mass or more and 30.0% by mass or less with respect to the total amount of the negative-electrode active material layer 122.

The thickness of the negative-electrode active material layer 122 is preferably 3.0 µm or more and 100.0 µm or less, 10.0 µm or more and 70.0 µm or less, or 20.0 µm or more and 60.0 µm or less.

### 1.2. Separator

The separator 130 according to the present embodiment includes the adhesive layer 131 on a surface of the separator body 132 on the negative electrode 120 side. The separator 130 is not particularly limited as long as it has a function of physically and/or electrically isolating the positive electrode 110 and the negative electrode 120 and a function of ensuring ion conductivity of lithium ions. In order to have such a function, examples of a material of the separator body 132 include an insulating porous member, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator body 132, one kind of member may be used alone, or two or more kinds of members may be used in combination.

As the separator body 132, the insulating porous member, the polymer electrolyte, or the gel electrolyte is preferably used alone or in a combination of two or more kinds thereof. It is noted that, when the insulating porous member is used alone as the separator body 132, the lithium secondary battery 100 needs to further include an electrolyte solution.

The polymer electrolyte is not particularly limited, and examples thereof include a solid polymer electrolyte mainly including a polymer and an electrolyte, and a semi-solid polymer electrolyte mainly including a polymer, an electrolyte, and a plasticizer.

The gel electrolyte is not particularly limited, and examples thereof include a gel electrolyte mainly including a polymer and a liquid electrolyte (that is, a solvent and an electrolyte).

The polymer that can be included in the polymer electrolyte and the gel electrolyte is not particularly limited, and examples thereof include a polymer including a functional group including an oxygen atom, such as an ether and an ester, a halogen group, and a polar group such as a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, polylactic acid, polyurethane, polyacetal, polysulfone, polyethylene carbonate, polypropylene carbonate, and polytetrafluoroethylene. One kind of such a resin as described above may be used alone, or two or more kinds thereof may be used in combination.

Examples of the electrolyte included in the polymer electrolyte and the gel electrolyte include salts of Li, Na, K, Ca, Mg, and the like. Typically, in the present embodiment, the polymer electrolyte and the gel electrolyte include a lithium salt.

The lithium salt is not particularly limited, and examples thereof include LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄. Among these, at least one selected from the group consisting of LiPF₆, LiN(SO₂F)₂, LiN(SO₂CF₃)₂, and LiN(SO₂CF₃CF₃)₂ is preferable. One kind of such a salt or lithium salt may be used alone, or two or more kinds thereof may be used in combination.

A blending ratio of the polymer and the lithium salt in the polymer electrolyte and the gel electrolyte may be determined by a ratio of the polar group included in the polymer to the lithium atom included in the lithium salt. For example, when the polymer has an oxygen atom, the blending ratio may be determined by a ratio ([Li]/[O]) of the number of lithium atoms included in the lithium salt to the number of oxygen atoms included in the polymer. In the polymer electrolyte and the gel electrolyte, the blending ratio of the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent included in the gel electrolyte is not particularly limited, and for example, one kind of solvent that can be included in the electrolyte solution described below can be used alone, or two or more kinds thereof can be used in combination. Preferred examples of the solvent are also the same as those in the electrolyte solution described below.

The plasticizer included in the semi-solid polymer electrolyte is not particularly limited, and examples thereof include the same components as the solvents that can be included in the gel electrolyte and various oligomers.

When the separator body 132 includes an insulating porous member, the pores of the member are filled with a substance having ion conductivity, whereby the member exhibits ion conductivity. As a result, in the present embodiment, the pores thereof are filled with, for example, the electrolyte solution according to the present embodiment, the gel electrolyte including the electrolyte solution according to the present embodiment, or the like.

The material constituting the insulating porous member is not particularly limited, and examples thereof include an insulating polymer material. Specifically, polyethylene (PE) and polypropylene (PP) are exemplary examples. That is, the separator body 132 may be a porous polyethylene (PE) film, a porous polypropylene (PP) film, or a laminated structure thereof.

### 1.2.1. Adhesive layer

The separator body 132 includes the adhesive layer 131 on a surface of the separator body 132 on the negative electrode 120 side. In addition, it is preferable that the adhesive layer 131 is provided on both surfaces of the separator body 132.

The adhesive layer 131 is porous and is not particularly limited. However, for example, an adhesive layer containing a binder such as polyvinylidene fluoride (PVdF), polyamide, a composite material of styrene-butadiene rubber and carboxymethyl cellulose (SBR-CMC), and polyacrylic acid (PAA) is preferable, and among these, PVdF is more preferable. In the adhesive layer 131, inorganic particles such as silica, alumina, titania, zirconia, and magnesium hydroxide may be added to the above-described binder.

The content of the binder is not particularly limited with respect to the total amount of the adhesive layer 131; however, it is, for example, 80% by mass or more and 100% by mass or less, 90% by mass or more and 100% by mass or less, or 100% by mass. In addition, the adhesive layer 131 may substantially consist of the binder. In addition, the adhesive layer 131 may contain inorganic particles such as alumina, titania, zirconia, and magnesium hydroxide. When the inorganic particles are contained, the content of the binder is preferably 10.0% by mass or more and 90.0% by mass or less, 20.0% by mass or more and 80.0% by mass or less, or 30.0% by mass or more and 70.0% by mass or less with respect to the total amount of the adhesive layer 131.

The thickness of the adhesive layer 131 is preferably 0.1 µm or more and 5.0 µm or less, 0.3 µm or more and 4.0 µm or less, or 0.5 µm or more and 3.0 µm or less.

The thickness of the separator 130 including the adhesive layer 131 is not particularly limited; however, it is, for example, 1.0 µm or more and 40.0 µm or less. In the lithium secondary battery 100, from the viewpoint of reducing the volume occupied by the separator 130 in the battery while reliably isolating the positive electrode 110 and the negative electrode 120, the thickness of the separator 130 is preferably 3.0 µm or more and 30.0 µm or less, 4.0 µm or more and 25.0 µm or less, or 5.0 µm or more and 20.0 µm or less.

In the lithium secondary battery 100 according to the present embodiment, the peel strength x between the resin layer 121b and the metal layer 121a at 25°C is 0.05 N/cm or more, preferably 0.05 N/cm or more and 2.00 N/cm or less, 0.06 N/cm or more and 1.50 N/cm or less, 0.07 N/cm or more and 1.45 N/cm or less, 0.08 N/cm or more and 1.40 N/cm or less, or 0.09 N/cm or more and 1.35 N/cm or less. When the peel strength x at 25°C is within the above-described range, the capacity retention rate of the lithium secondary battery 100 tends to be improved.

The peel strength x at 25°C can be adjusted by a method of providing the metal layer 121a on the resin layer 121b, and the type, composition, and the like of the resin of the resin layer 121b. In addition, the adjustment of the above-described method is not particularly limited. However, it includes, for example, providing the metal layer 121a by a plurality of methods such as vapor deposition and plating, and adjusting a time, an order, and the like of performing the plurality of methods.

In the lithium secondary battery 100 according to the present embodiment, the peel strength y between the negative-electrode active material layer 122 and the separator 130 at 25°C is preferably 0.06 N/cm or more, 0.07 N/cm or more, 0.06 N/cm or more and 2.00 N/cm or less, 0.07 N/cm or more and 1.75 N/cm or less, 0.08 N/cm or more and 1.50 N/cm or less, 0.09 N/cm or more and 1.40 N/cm or less, 0.10 N/cm or more and 1.35 N/cm or less, 0.11 N/cm or more and 1.30 N/cm or less, 0.12 N/cm or more and 1.25 N/cm or less, 0.13 N/cm or more and 1.20 N/cm or less, or 0.14 N/cm or more and 1.10 N/cm or less. When the peel strength y at 25°C is within the above-described range, the capacity retention rate of the lithium secondary battery 100 tends to be further improved.

The peel strength y at 25°C can be adjusted by the type and composition of the material contained in the negative-electrode active material layer 122, and the type and composition of the material contained in the adhesive layer 131, and the like.

In the lithium secondary battery 100 according to the present embodiment, a peel strength z between the metal layer 121a and the negative-electrode active material layer 122 at 25°C is preferably 0.30 N/cm or more, 0.30 N/cm or more and 3.00 N/cm or less, or 0.35 N/cm or more and 2.50 N/cm or less. When the peel strength z at 25°C is within the above-described range, the capacity retention rate of the lithium secondary battery 100 tends to be further improved.

The peel strength z at 25°C can be adjusted by the type and composition of the material contained in the negative-electrode active material layer 122, and the type and composition of the metal contained in the metal layer 121a, and the like.

In the lithium secondary battery 100 according to the present embodiment, the peel strength y between the negative-electrode active material layer 122 and the separator 130 at 25°C satisfies x < y in a relationship with the peel strength x at 25°C. When the peel strength x at 25°C and the peel strength y at 25°C satisfy the above-described relationship, the capacity retention rate of the lithium secondary battery 100 tends to be improved.

In addition, in the lithium secondary battery 100 according to the present embodiment, it is preferable that the peel strength y at 25°C satisfies y > 0.1 + 0.5x in a relationship with the peel strength x at 25°C. When the peel strength x at 25°C and the peel strength y at 25°C satisfy the above-described relationship, the capacity retention rate of the lithium secondary battery 100 tends to be further improved.

In addition, in the lithium secondary battery 100 according to the present embodiment, it is preferable that the peel strength x at 25°C, the peel strength y at 25°C, and the peel strength z at 25°C satisfy x < y < (z/2). In the negative electrode 120 of the lithium secondary battery 100, the electron transfer is performed between the metal layer 121a and the negative-electrode active material layer 122, and when the peeling occurs between the metal layer 121a and the negative-electrode active material layer 122, the properties such as the capacity retention rate of the battery tend to be significantly deteriorated. Therefore, when the peel strength z at 25°C is sufficiently larger than the peel strength x at 25°C and the peel strength y at 25°C, the peeling between the metal layer 121a and the negative-electrode active material layer 122 is prevented, and the capacity retention rate of the lithium secondary battery 100 tends to be further improved.

It is noted that, when the peel strength x at 25°C, the peel strength y at 25°C, and the peel strength z at 25°C satisfy x ≥ 0.05 N/cm and x < y < (z/2), x is preferably 0.09 N/cm or more, 0.05 N/cm or more and 2.00 N/cm or less, 0.06 N/cm or more and 1.50 N/cm or less, 0.07 N/cm or more and 1.45 N/cm or less, 0.08 N/cm or more and 1.40 N/cm or less, or 0.09 N/cm or more and 1.35 N/cm or less.

In addition, when the peel strength x at 25°C, the peel strength y at 25°C, and the peel strength z at 25°C satisfy x ≥ 0.05 N/cm and x < y < (z/2), z is preferably 0.30 N/cm or more, 0.30 N/cm or more and 3.00 N/cm or less, or 0.35 N/cm or more and 2.50 N/cm or less.

The peel strength x at 25°C, the peel strength y at 25°C, and the peel strength z at 25°C can be measured in accordance with a peeling adhesion strength test method by 180-degree peeling according to JIS K 6854-2: 1999 by setting the temperature at 25°C.

It is noted that, in the present embodiment, 25°C is used as the temperature for measuring the peel strength. In this regard, depending on the specifications of the lithium secondary battery, it is also assumed that the temperature during charging or discharging of the lithium secondary battery is higher or lower than 25°C. However, even when the temperature during charging or discharging of the actual lithium secondary battery is not 25°C but is higher or lower than 25°C, by making the peel strength measured with 25°C as a reference satisfy a predetermined range, the adhesiveness between the resin layer 121b and the metal layer 121a, the adhesiveness between the negative-electrode active material layer 122 and the separator 130, and the adhesiveness between the metal layer 121a and the negative-electrode active material layer 122 are improved, and as a result, it can be said that the capacity retention rate of the lithium secondary battery 100 is improved.

### 1.3. Positive electrode

The positive electrode 110 according to the present embodiment is not particularly limited as long as it is generally used for a lithium secondary battery, and a known material can be appropriately selected depending on the use application of the lithium secondary battery. From the viewpoint of improving the stability and the output voltage of the battery, it is preferable that the positive electrode 110 includes the positive electrode current collector 111 and a positive-electrode active material layer 112.

The average thickness of the positive electrode 110 is not particularly limited; however, it is, for example, 10 µm or more and 100 µm or less, 20 µm or more and 90 µm or less, 30 µm or more and 80 µm or less, or 40 µm or more and 70 µm or less. However, the average thickness of the positive electrode 30 can be appropriately adjusted according to the desired capacity of the battery.

### 1.3.1. Positive electrode current collector

The positive electrode current collector 111 according to the present embodiment is not particularly limited as long as it has a metal that does not react with lithium in the lithium secondary battery. Examples of such a metal include aluminum. In addition, the positive electrode current collector 111 according to the present embodiment may have a single-layer structure including only a metal layer containing the above-described metal, or may have a multilayer structure including a resin layer and a metal layer containing the above-described metal provided on both surfaces of the resin layer.

When the positive electrode current collector 111 has a multilayer structure, the metal constituting the metal layer is not particularly limited as long as it is a metal that does not react with lithium in the lithium secondary battery, and examples of such a metal include aluminum.

The content of the metal is preferably 80% by mass or more and 100% by mass or less, 90% by mass or more and 100% by mass or less, 95% by mass or more and 100% by mass or less, or 100% by mass, with respect to the total amount of the metal layer. In addition, it is preferable that the metal layer substantially consists of the metal.

When the positive electrode current collector 111 has a multilayer structure, the thickness of the metal layer is preferably 0.1 µm or more and 4.0 µm or less, 0.2 µm or more and 3.0 µm or less, 0.3 µm or more and 2.5 µm or less, or 0.4 µm or more and 2.0 µm or less.

When the positive electrode current collector 111 has a multilayer structure, examples of the resin constituting the resin layer include the same ones as those in the resin layer 121b of the negative electrode current collector 121. In addition, the resin layer may appropriately contain other additives according to the desired physical properties, and examples of the other additives include the same ones as those in the resin layer 121b of the negative electrode current collector 121. In addition, the content of the resin in the resin layer may be the same as the content of the resin in the resin layer 121b of the negative electrode current collector 121. In addition, the thickness of the resin layer may be the same as the thickness of the resin layer 121b of the negative electrode current collector 121.

### 1.3.2. Positive-electrode active material layer

The positive-electrode active material layer 112 according to the present embodiment contains a positive-electrode active material. The positive-electrode active material is a material that causes an electrode reaction, that is, an oxidation reaction and a reduction reaction, in the positive electrode. Specifically, examples of the positive-electrode active material according to the present embodiment include a host material for a lithium element (typically, a lithium ion).

Such a positive-electrode active material is not particularly limited, and examples thereof include a metal oxide and a metal phosphate. The metal oxide is not particularly limited, and examples thereof include a cobalt oxide-based compound, a manganese oxide-based compound, and a nickel oxide-based compound. The metal phosphate is not particularly limited, and examples thereof include an iron phosphate-based compound and a cobalt phosphate-based compound. Typical examples of the positive-electrode active material include LiCoO₂, LiNiₓCo_{y}Mn_{z}O₂ (x + y + z = 1), LiNiₓCo_{y}Al_{z}O₂ (x + y + z = 1), LiNiₓMn_{y}O₂ (x + y = 1), LiNiO₂, LiMn₂O₄, LiFePO₄, LiCoPO₄, LiFeOF, LiNiOF, and LiTiS₂. One kind of positive-electrode active material may be used alone, or two or more kinds thereof may be used in combination.

The content of the positive-electrode active material is not particularly limited with respect to the total amount of a positive-electrode active material composition, and is, for example, 60% by mass or more and 100% by mass or less, 70% by mass or more and 99% by mass or less, 80% by mass or more and 99% by mass or less, 85% by mass or more and 99% by mass or less, or 90% by mass or more and 99% by mass or less.

The positive-electrode active material layer 112 according to the present embodiment may contain a binder. When the positive-electrode active material layer 112 contains a binder, the positive-electrode active material layer 112 tends to be easily bound to the positive electrode current collector 111.

The binder according to the present embodiment is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; a polyimide resin; and the like. One kind of binder may be used alone, or two or more kinds thereof may be used in combination.

The content of the binder is not particularly limited with respect to the total amount of the positive-electrode active material layer 112, and is, for example, 0.5% by mass or more and 10.0% by mass or less, 0.5% by mass or more and 8.0% by mass or less, or 0.5% by mass or more and 6.0% by mass or less.

The positive-electrode active material layer 112 according to the present embodiment may contain a conductive auxiliary agent. The conductive auxiliary agent is not particularly limited, and examples thereof include carbon black, carbon nanotube, carbon nanofiber (CF), and acetylene black. One kind of conductive auxiliary agent may be used alone, or two or more kinds thereof may be used in combination.

The content of the conductive auxiliary agent is not particularly limited with respect to the total amount of the positive-electrode active material layer 112, and is, for example, 0.5% by mass or more and less than 30.0% by mass.

The lithium secondary battery 100 according to the present embodiment may include a laminate in which a plurality of sets of the positive electrode 110, the separator 130, and the negative electrode 120 are laminated. When the laminate in which a plurality of sets of the positive electrode 110, the separator 130, and the negative electrode 120 are laminated is provided, the performance of the battery tends to be improved.

### 1.4. Electrolyte solution

The lithium secondary battery 100 according to the present embodiment preferably contains an electrolyte solution. The electrolyte solution is not particularly limited as long as it is a liquid containing a solvent and an electrolyte and has ion conductivity. The electrolyte solution may be infiltrated into the separator 130, and a lithium secondary battery 100 in which the electrolyte solution is enclosed together with a laminate of the negative electrode 120, the separator 130, and the positive electrode 110 may be used as a finished product of the lithium secondary battery 100.

As the electrolyte contained in the electrolyte solution, an electrolyte that can be contained in a polymer electrolyte and a gel electrolyte, particularly, the above-described lithium salt can be used alone or in a combination of two or more kinds thereof. The preferred lithium salt is the same as that in the polymer electrolyte and the gel electrolyte.

The solvent contained in the electrolyte solution is not particularly limited, and examples thereof include a chain-like carbonate, a cyclic carbonate, a chain-like ether, and other solvents other than these solvents. One kind of solvent may be used alone, or two or more kinds thereof may be used in combination.

The chain-like carbonate is a carbonate having no cyclic structure such as an aromatic ring, an alicyclic ring, an isocyclic ring, and a heterocyclic ring. The chain-like carbonate is not particularly limited, and examples thereof include dimethyl carbonate (DMC), diethyl carbonate, ethyl methyl carbonate (EMC), and a compound in which a part or all of hydrogen atoms in these carbonates are substituted with fluorine.

The cyclic carbonate is a carbonate having a cyclic structure such as an aromatic ring, an alicyclic ring, an isocyclic ring, and a heterocyclic ring. The cyclic carbonate is not particularly limited, and examples thereof include ethylene carbonate (EC), propylene carbonate, chloroethylene carbonate, and a compound in which a part or all of hydrogen atoms in these carbonates are substituted with fluorine.

The chain-like ether is an ether having no cyclic structure such as an aromatic ring, an alicyclic ring, an isocyclic ring, and a heterocyclic ring. The chain-like ether is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, triethylene glycol dimethyl ether, tetraethylene glycol dimethyl ether, dimethoxyethane, diethoxyethane, dimethoxypropane, dimethoxybutane, and diethylene glycol dimethyl ether.

The other solvents are not particularly limited, and examples thereof include acetonitrile, methyl acetate, ethyl acetate, propyl acetate, methyl propionate, ethyl propionate, 12-crown-4, trimethyl phosphate, triethyl phosphate, a derivative of 1,1,2,2-tetrafluoroethyl-2,2,3,3-tetrafluoropropyl ether, a derivative of 1,1,2,2-tetrafluoroethyl-2,2,2-trifluoroethyl ether, and a derivative of 1H,1H,5H-octafluoropentyl-1,1,2,2-tetrafluoroethyl ether.

The total amount of the chain-like carbonate and the cyclic carbonate is not particularly limited with respect to the total amount of the solvent; however, it is, for example, 40% by volume or more and 100% by volume or less, 60% by volume or more and 100% by volume or less, or 80% by volume or more and 100% by volume or less.

The content of the chain-like ether is not particularly limited with respect to the total amount of the solvent; however, it is, for example, 5% by volume or more and 40% by volume or less, or 10% by volume or more and 30% by volume or less. In addition, the solvent may not include the chain-like ether.

The content of the other solvents is not particularly limited with respect to the total amount of the solvent; however, it is, for example, 1% by volume or more and 10% by volume or less. In addition, the solvent may not include the other solvents.

The electrolyte solution according to the present embodiment preferably contains an additive. The additive is not particularly limited, and examples thereof include vinylene carbonate (VC), lithium difluorophosphate (LiPO₂F₂), and lithium bis(fluorosulfonyl)imide (LiFSI).

The content of the additive is not particularly limited with respect to the total amount of the solvent; however, it is, for example, 0.1% by mass or more and 5.0% by mass or less.

### 2. Use of lithium secondary battery

An exemplary use aspect of the lithium secondary battery 100 will be described. In the exemplary use aspect of the lithium secondary battery 100, a positive electrode terminal and a negative electrode terminal for connecting the battery to an external circuit are respectively joined to the positive electrode current collector 111 and the negative electrode current collector 121. In the lithium secondary battery 100, the negative electrode terminal is connected to one end of the external circuit, and the positive electrode terminal is connected to the other end of the external circuit, and charging/discharging is performed. In the positive electrode terminal and the negative electrode terminal, the lithium secondary battery 100 is charged by applying a voltage so that a current flows from the negative electrode terminal (negative electrode) to the positive electrode terminal (positive electrode) through the external circuit. In the lithium secondary battery after charging, the lithium secondary battery is discharged by connecting the positive electrode terminal and the negative electrode terminal with a desired external circuit being interposed therebetween.

### 3. Method for manufacturing lithium secondary battery

A method for manufacturing the lithium secondary battery 100 according to the present embodiment includes a negative electrode current collector preparation step of preparing the negative electrode current collector 121 including the resin layer 121b and the metal layers 121a provided on both surfaces of the resin layer 121b, a negative electrode production step of producing the negative electrode 120 by forming the negative-electrode active material layer 122 on the negative electrode current collector 121, a laminate production step of disposing the negative electrode 120, the positive electrode 110, and the separator 130 so that the negative-electrode active material layer 122 faces the positive electrode 110 with the separator 130 including the adhesive layer 131 being interposed between the negative-electrode active material layer 122 and the positive electrode 110 and the adhesive layer 131 is adjacent to the negative-electrode active material layer 122, a heat press step of pressurizing the laminate while heating the laminate, in which in the lithium secondary battery 100, a peel strength x between the resin layer 121b and the metal layer 121a at 25°C is 0.05 N/cm or more, and a peel strength y between the negative-electrode active material layer 122 and the separator 130 at 25°C satisfies x < y.

Hereinafter, the method for manufacturing the lithium secondary battery 100 according to the present embodiment will be described in detail.

### 3.1. Negative electrode current collector preparation step

In the negative electrode current collector preparation step according to the present embodiment, the negative electrode current collector 121 including the resin layer 121b and the metal layers 121a provided on both surfaces of the resin layer 121b is prepared. As the negative electrode current collector 121, a commercially available product may be used, or the negative electrode current collector 121 may be produced from various materials. When producing the negative electrode current collector 121, examples of the method include forming the metal layer 121a on both surfaces of the resin layer 121b by vapor deposition, sputtering, plating such as electroplating, or with an adhesive or the like. Among these methods, vapor deposition or plating is preferable, and plating after vapor deposition is more preferable. It is preferable to produce the negative electrode current collector 121 by vapor-depositing a metal on both surfaces of the resin layer 121b and then plating the metal to provide the metal layers 121a on both surfaces of the resin layer 121b.

The method of vapor-depositing the metal layer 121a on the resin layer 121b is not particularly limited, and examples thereof include a vacuum vapor deposition method, a sputtering method, and an ion plating method.

### 3.2. Negative electrode production step

In the negative electrode production step according to the present embodiment, the negative-electrode active material layer 122 is formed on the negative electrode current collector 121. The method of forming the negative-electrode active material layer 122 on the negative electrode current collector 121 is not particularly limited, and examples thereof include the following method. First, as necessary, a negative-electrode active material and a binder, a conductive auxiliary agent, other additives, and the like other than the negative-electrode active material are mixed to obtain a negative-electrode active material composition. The negative-electrode active material or the obtained negative-electrode active material composition is applied onto both surfaces or one surface of the negative electrode current collector 121 and subjected to press molding to form the negative-electrode active material layer 122 on both surfaces or one surface of the negative electrode current collector 121, thereby obtaining a molded body. The obtained molded body is punched into a predetermined shape by punching to produce the negative electrode 120 according to the present embodiment.

Examples of other methods of forming the negative-electrode active material layer 122 on the negative electrode current collector 121 include a method of curing the negative-electrode active material composition by heating the negative-electrode active material composition containing a thermosetting compound, a method of curing the negative-electrode active material composition by irradiating the negative-electrode active material composition containing a photocurable compound with light; a method of curing the negative-electrode active material composition as a two-liquid curable composition by mixing the negative-electrode active material composition; and the like.

### 3.3. Laminate production step

In the laminate production step according to the present embodiment, the negative electrode 120, the positive electrode 110, and the separator 130 are disposed so that the negative-electrode active material layer 122 faces the positive electrode 110 with the separator 130 including the adhesive layer 131 and the adhesive layer 131 is adjacent to the negative-electrode active material layer 122, thereby producing a laminate.

The separator 130 preferably has the adhesive layer 131 on both surfaces, and in this case, one adhesive layer 131 is adjacent to the negative-electrode active material layer 122 and the other adhesive layer 131 is adjacent to the positive-electrode active material layer 112.

### 3.4. Heat press step

In the heat press step according to the present embodiment, the laminate is pressurized while being heated. Examples of the heat press step include a pre-liquid injection heat press step performed before the laminate is sealed in a sealing container together with the electrolyte solution; a post-liquid injection heat press step performed after the laminate is sealed in a sealing container together with the electrolyte solution; and a heat press step during charging performed by sealing the laminate in a sealing container together with the electrolyte solution and then performing a heat press step at a temperature of 60°C or lower while carrying out charging. By performing the heat press step, the adhesive strength between the respective layers of the lithium secondary battery 100 tends to be further improved.

In the heat press step, it is preferable to carry out heating so that the surface temperature of the battery is 50°C or higher and 150°C or lower, and it is more preferable to carry out heating so that the surface temperature of the battery is 55°C or higher and 120°C or lower.

In the heat press step, it is preferable to carry out pressurization at 250 kPa or more and 2,000 kPa or less, and it is more preferable to carry out pressurization at 300 kPa or more and 1,750 kPa or less.

### 3.5. Sealing step

The method for manufacturing the lithium secondary battery 100 according to the present embodiment may include a sealing step. In the sealing step, the laminate is sealed in a sealing container to obtain the lithium secondary battery 100. The sealing container is not particularly limited, and examples thereof include a laminated film. In addition, when the laminate is sealed in a sealing container, the laminate may be sealed together with the electrolyte solution.

### 3.6. Positive electrode production step

The method for manufacturing the lithium secondary battery 100 according to the present embodiment may include a positive electrode production step. In the positive electrode production step, the positive-electrode active material layer 112 is formed on the positive electrode current collector 111. The method of forming the positive-electrode active material layer 112 on the positive electrode current collector 111 is not particularly limited, and examples thereof include the following method. First, as necessary, a positive-electrode active material and a binder, a conductive auxiliary agent, other additives, and the like other than the negative/positive-electrode active material are mixed to obtain the positive-electrode active material composition. The positive-electrode active material or the obtained positive-electrode active material composition is applied onto both surfaces or one surface of the positive electrode current collector 111, and subjected to press molding to form the positive-electrode active material layer 112 on both surfaces or one surface of the positive electrode current collector 111, thereby obtaining a molded body. The obtained molded body is punched into a predetermined shape by punching, thereby producing the positive electrode 110 according to the present embodiment.

Examples of other methods of forming the positive-electrode active material layer 112 on the positive electrode current collector 111 include a method of curing the positive-electrode active material composition by heating the positive-electrode active material composition containing a thermosetting compound, a method of curing the positive-electrode active material composition by irradiating the positive-electrode active material composition containing a photocurable compound with light; a method of curing the positive-electrode active material composition by mixing the positive-electrode active material composition as a two-liquid curable composition; and the like.

It is noted that, when the positive electrode current collector 111 includes a resin layer and metal layers provided on both surfaces of the resin layer, a commercially available product may be used as the positive electrode current collector 111 or the positive electrode current collector 111 may be produced from various materials. When producing the positive electrode current collector 111, examples of the method thereof include the same method as the method of producing the negative electrode current collector 121.

### 3.7. Other steps

The method for manufacturing the lithium secondary battery 100 according to the present embodiment may include other steps. The other steps are not particularly limited, and examples thereof include a step of forming a functional layer for imparting a desired function to the lithium secondary battery 100.

### EXAMPLES

The present invention will be described in detail by using Examples and Comparative Examples. The present invention is not limited to the following Examples and Comparative Examples. In addition, unless otherwise specified, the operation was carried out at room temperature (25°C) and 1 atm.

### 1. Production of lithium secondary battery

A lithium secondary battery of Example 1 was produced as follows.

### 1.1. Production of negative electrode

CC1 which is a negative electrode current collector, in which a Cu layer which is a metal layer was formed to have a thickness of 1.0 µm on both surfaces of a film-shaped polypropylene (PP) which is a resin layer and has a thickness of 4.5 µm, was prepared. A Cu layer having a thickness of 0.10 µm was formed by vacuum vapor deposition, and then a Cu layer having a thickness of 0.90 µm was further formed by electroplating, thereby forming a Cu layer having a thickness of 1.0 µm.

As a solvent, water was mixed with 99.0 parts by mass of artificial graphite as a negative-electrode active material, 0.5 parts by mass of styrene-butadiene rubber (SBR) as a binder, and 0.5 parts by mass of carboxymethyl cellulose (CMC) as a binder to prepare a negative-electrode active material composition. This negative-electrode active material composition was applied and pressed onto the individual one surface of the negative electrode current collector so that the weight per unit area was 15 mg/cm², thereby forming a negative-electrode active material layer on the individual one surface of the negative electrode current collector to obtain a molded body. This molded body was cut into a predetermined size (4.5 x 4.5 cm in length and width). In this manner, a negative electrode was obtained.

### 1.2. Production of positive electrode

As a positive electrode current collector, an aluminum foil having a thickness of 12 µm was used. Then, a positive-electrode active material composition was prepared by mixing 96 parts by mass of LiNi_{0.8}Co_{0.1}Mn_{0.1}O₂ as a positive-electrode active material, 1 part by mass of acetylene black and 1 part by mass of carbon nanotubes as conductive auxiliary agents, and 2 parts by mass of polyvinylidene fluoride (PVdF) as a binder in N-methyl-pyrrolidone (NMP) as a solvent.

This positive-electrode active material composition was applied and pressed onto the individual one surface of the positive electrode current collector so that the weight per unit area was 23 mg/cm², thereby forming a positive-electrode active material layer on the individual one surface of the positive electrode current collector to obtain a molded body. This molded body was cut into a predetermined size (4 x 4 cm in length and width).

### 1.3. Preparation of separator

A sheet of a polyethylene microporous membrane (thickness: 8 µm, length and width: 5 x 5 cm) was prepared as a separator body. Then, an adhesive layer containing polyvinylidene fluoride (PVdF) was formed on both surfaces of the separator body to have a thickness of 2 µm. The thickness of the separator was 12 µm.

### 1.4. Adjustment of electrolyte solution

30% by volume of ethylene carbonate (EC), 35% by volume of dimethyl carbonate (DMC), and 35% by volume of ethyl methyl carbonate (EMC) were mixed to prepare 100% by volume of a mixed solvent. LiPF₆ was dissolved in this mixed solvent so that the concentration thereof was 1 M, and vinylene carbonate (VC) and LiPO₂F₂ were further dissolved therein to obtain an electrolyte solution. The VC was 2% by mass with respect to the total mass of the mixed solvent (that is, the total mass of EC, DMC, and EMC not containing VC, LiPO₂F₂, and LiPF₆). The LiPO₂F₂ was 1% by mass with respect to the total mass of the mixed solvent.

### 1.5. Assembly of battery

Next, the positive electrode, the separator, and the negative electrode were disposed so that the negative-electrode active material layer faced the positive-electrode active material layer with the separator being interposed therebetween, thereby obtaining a laminate. Further, an Al terminal of 100 µm and a Ni terminal of 100 µm were respectively joined to the positive electrode current collector and the negative electrode current collector by ultrasonic welding, followed by being inserted into an exterior body of the laminate. Next, the above-described electrolyte solution was injected into the above-described exterior body. The exterior body was sealed to obtain a lithium secondary battery.

### 1.6. Heat pressing

The lithium secondary battery into which the electrolyte solution had been injected, which was obtained as described above, was subjected to post-liquid injection heat pressing using a high-temperature heat press machine. The post-liquid injection heat pressing was carried out by carrying out heating for 3 minutes after the temperature of the battery surface reached 60°C, while carrying out pressurization at 350 kPa.

Lithium secondary batteries of Examples 2 to 8 and Comparative Examples 1 to 7 were obtained in the same manner as in Example 1, except that the negative electrode current collector and the negative-electrode active material composition shown in Table 1 were used, the adhesive layer shown in Table 1 was used when using the adhesive layer, and the heat pressing was carried out under the heat pressing conditions shown in Table 1 when performing the post-liquid injection heat pressing.

It is noted that CC2 to CC5, which were the negative electrode current collectors, were prepared as follows.

CC2, in which a Cu layer which is a metal layer was formed to have a thickness of 1.0 µm on both surfaces of a film-shaped polypropylene (PP) which is a resin layer and has a thickness of 4.5 µm, was prepared. A Cu layer having a thickness of 0.20 µm was formed by vacuum vapor deposition, and a Cu layer having a thickness of 0.80 µm was further formed by electroplating, thereby forming a Cu layer having a thickness of 1.0 µm.

CC3, in which a Cu layer which is a metal layer was formed to have a thickness of 1.0 µm on both surfaces of a film-shaped polyethylene (PE) which is a resin layer and has a thickness of 4.5 µm, was prepared. A Cu layer having a thickness of 0.20 µm was formed by vacuum vapor deposition, and a Cu layer having a thickness of 0.80 µm was further formed by electroplating, thereby forming a Cu layer having a thickness of 1.0 µm.

CC4, in which a Cu layer which is a metal layer was formed to have a thickness of 1.0 µm on both surfaces of a film-shaped polyethylene terephthalate (PET) which is a resin layer and has a thickness of 4.5 µm, was prepared. A Cu layer having a thickness of 0.20 µm was formed by vacuum vapor deposition, and a Cu layer having a thickness of 0.80 µm was further formed by electroplating, thereby forming a Cu layer having a thickness of 1.0 µm.

CC5, in which a Cu layer which is a metal layer was formed to have a thickness of 1.0 µm on both surfaces of a film-shaped polypropylene (PP) which is a resin layer and has a thickness of 4.5 µm, was prepared. A Cu layer having a thickness of 0.05 µm was formed by vacuum vapor deposition, and a Cu layer having a thickness of 0.95 µm was further formed by electroplating, thereby forming a Cu layer having a thickness of 1.0 µm.

The peel strengths x, y, and z at 25°C were measured in accordance with the peeling adhesion strength test method by 180-degree peeling according to JIS K 6854-2:1999 in an environment of a temperature of 25°C. Specifically, the measurement was performed as follows. When performing heat pressing, the measurement was performed using the lithium secondary battery after the heat pressing. When not performing heat pressing, the measurement was performed using the assembled lithium secondary battery. As necessary, the lithium secondary battery was disassembled, and the peel strengths x, y, and z at 25°C were measured.

In the measurement of the peel strength x at 25°C, a tape having a width of 15 mm was attached to the metal layer, the tape was bent by 180° and pulled, and the metal layer was peeled off from the resin layer. The peel strength x (N/cm) was determined from the force applied when peeling the metal layer off from the resin layer.

In the measurement of the peel strength y at 25°C, a tape having a width of 15 mm was attached to the negative-electrode active material layer, the tape was bent by 180° and pulled, and the negative-electrode active material layer was peeled off from the separator. The peel strength y (N/cm) was determined from the force applied when peeling the negative-electrode active material layer off from the separator.

In the measurement of the peel strength z at 25°C, a tape having a width of 15 mm was attached to the negative-electrode active material layer, the tape was bent by 180° and pulled, and the negative-electrode active material layer was peeled off from the metal layer. The peel strength z (N/cm) was determined from the force applied when peeling the negative-electrode active material layer off from the metal layer.

It is noted that the tape used in the test of the peel strength had a sufficiently strong adhesive force, and when peeling one layer off from the other layer, the tape was completely adhered in close contact to one layer. For example, in order to measure the peel strength x at 25°C, when peeling the metal layer off from the resin layer, the tape was completely adhered in close contact to the metal layer.

In the table, the peel strength relational expression 1 is x < y, and the peel strength relational expression 2 is x < y < (z/2). In addition, in the table, the column of the thickness of the vapor deposition layer/plating layer indicates the thicknesses of the vapor deposition layer and the plating layer in the metal layer of the negative electrode current collector.

### 2. Evaluation

Hereinafter, carrying out initial CC charging of the produced lithium secondary battery is also referred to as "initial charging", and carrying out initial CC discharging is also referred to as "initial discharging". It is noted that the CC charging is charging performed at a constant current value, and the CC discharging is discharging performed at a constant current value. In addition, the current of 1 C is a current capable of completely charging a battery in 1 hour, which is calculated based on the theoretical capacity of the battery. The current of 2 C is twice the magnitude of the current of 1 C.

### 2.1. Capacity retention rate

The lithium secondary batteries of Examples and Comparative Examples were pressurized at 350 kPa in an environment of a temperature of 25°C, initially charged at a current of 0.1 C until the voltage reached 4.2 V, and then initially discharged at a current of 0.1 C until the voltage reached 3.0 V. Next, the lithium secondary batteries of Examples and Comparative Examples were subjected to a cycle of CC charging at a current of 1.0 C until the voltage reached 4.2 V in an environment of a temperature of 25°C without pressurization, and then CC discharging at a current of 1.0 C until the voltage reached 3.0 V, and the discharge capacity (first cycle) was determined from the CC discharging. Then, this cycle was performed for 100 cycles, and the discharge capacity (100th cycle) was obtained from the CC discharging in the 100th cycle. Then, the capacity retention rate in the 100th cycle was determined by dividing the discharge capacity (100th cycle) by the discharge capacity (first cycle) and multiplying the resultant value by 100. This value is shown in the column of the capacity retention rate in Table 1.

**[Table 1]**

| | Negative electrode current collector | Thickness of vapor deposition layer/plating layer (µm/µm) | Peel strength x (N/cm) | Magnitude of x with respect to 0.05 N/cm | Presence or absence of adhesive layer | Material of adhesive layer | Heat pressing conditions | | | Peel strengthy (N/cm) | Application of peel strength relational expression 1 | Rate of contents of negative-electrode active material:SBR:CMC | Peel strength z (N/cm) | Application of peel strength relational expression 2 | Capacity retention rate (%) |
|---|---|---|---|---|---|---|---|---|---|---|---|---|---|---|---|
| | | | | | | | Presence or Absence | Pressurization (kPa) | Temperature (°C) | | | | | | |
| Example 1 | CC1 | 0.10/0.90 | 0.056 | Large | Present | PVdF | Present | 350 | 60 | 0.071 | Applied | 99.0:0.5:0.5 | 0.071 | Not applied | 90.1 |
| Example 2 | CC1 | 0.10/0.90 | 0.056 | Large | Present | PVdF | Present | 600 | 60 | 0.113 | Applied | 98.6:0.7:0.7 | 0.161 | Not applied | 91.3 |
| Example 3 | CC1 | 0.10/0.90 | 0.056 | Large | Present | PVdF | Present | 800 | 60 | 0.135 | Applied | 98.0:1.0:1.0 | 0.246 | Not applied | 93.8 |
| Example 4 | CC2 | 0.20/0.80 | 0.098 | Large | Present | PVdF | Present | 800 | 90 | 0.156 | Applied | 98.6:0.7:0.7 | 0.161 | Not applied | 92.2 |
| Example 5 | CC2 | 0.20/0.80 | 0.098 | Large | Present | PVdF | Present | 800 | 90 | 0.156 | Applied | 97.5:1.5:1.0 | 0.356 | Applied | 97.8 |
| Example 6 | CC2 | 0.20/0.80 | 0.098 | Large | Present | PVdF | Present | 1500 | 100 | 0.161 | Applied | 97.5:1.5:1.0 | 0.356 | Applied | 98.2 |
| Example 7 | CC2 | 0.20/0.80 | 0.098 | Large | Present | Polyamide | Present | 1500 | 100 | 0.122 | Applied | 97.5:1.5:1.0 | 0.356 | Applied | 91.4 |
| Example 8 | CC3 | 0.20/0.80 | 0.094 | Large | Present | PVdF | Present | 1500 | 100 | 0.161 | Applied | 97.5:1.5:1.0 | 0.356 | Applied | 92.4 |
| Comparative Example 1 | CC4 | 0.20/0.80 | 2.150 | Large | Present | PVdF | Present | 1500 | 100 | 0.161 | Not applied | 99.0:0.5:0.5 | 0.071 | Not applied | 51.5 |
| Comparative Example 2 | CC4 | 0.20/0.80 | 2.150 | Large | Present | PVdF | Present | 1500 | 100 | 0.161 | Not applied | 97.5:1.5:1.0 | 0.356 | Not applied | 61.9 |
| Comparative Example 3 | CC5 | 0.05/0.95 | 0.031 | Small | Absent | - | Absent | - | - | 0.044 | Applied | 99.0:0.5:0.5 | 0.071 | Not applied | 57.7 |
| Comparative Example 4 | CC5 | 0.05/0.95 | 0.031 | Small | Present | PVdF | Present | 1500 | 100 | 0.161 | Applied | 98.6:0.7:0.7 | 0.161 | Not applied | 61.3 |
| Comparative Example 5 | CC5 | 0.05/0.95 | 0.031 | Small | Present | PVdF | Present | 1500 | 100 | 0.161 | Applied | 97.5:1.5:1.0 | 0.356 | Applied | 75.9 |
| Comparative Example 6 | CC2 | 0.20/0.80 | 0.098 | Large | Absent | - | Absent | - | - | 0.044 | Not applied | 97.5:1.5:1.0 | 0.356 | Not applied | 78.2 |
| Comparative Example 7 | CC2 | 0.20/0.80 | 0.098 | Large | Absent | - | Present | 1500 | 100 | 0.048 | Not applied | 97.5:1.5:1.0 | 0.356 | Not applied | 77.9 |

### 3. Evaluation result

From Table 1, in Examples of the lithium secondary battery including a positive electrode 110, a separator 130, and a negative electrode 120 including a negative electrode current collector 121 and a negative-electrode active material layer 122 on the negative electrode current collector 121, in which the negative electrode current collector 121 includes a resin layer 121b and a metal layers 121a provided on both surfaces of the resin layer 121b, the negative-electrode active material layer 122 faces the positive electrode 110 with the separator 130 being interposed between the negative-electrode active material layer 122 and the positive electrode 110, the separator 130 includes an adhesive layer 131 on a surface on the negative electrode 120 side, a peel strength x between the resin layer 121b and the metal layer 121a at 25°C is 0.05 N/cm or more, and a peel strength y between the negative-electrode active material layer 122 and the separator 130 at 25°C satisfies x < y, a favorable capacity retention rate is exhibited as compared with Comparative Examples of the lithium secondary battery which is not the lithium secondary battery of Examples.

### <Addenda>

The embodiment according to the present disclosure includes the following aspects.
[1] A lithium secondary battery including: a positive electrode; a separator; and a negative electrode including a negative electrode current collector and a negative-electrode active material layer on the negative electrode current collector,
   in which the negative electrode current collector includes a resin layer and metal layers provided on both surfaces of the resin layer,
   the negative-electrode active material layer faces the positive electrode with the separator being interposed between the negative-electrode active material layer and the positive electrode, the separator includes an adhesive layer on a surface on a side of the negative electrode,
   a peel strength x between the resin layer and the metal layer at 25°C is 0.05 N/cm or more, and
   a peel strength y between the negative-electrode active material layer and the separator at 25°C satisfies x < y.
[2] The lithium secondary battery according to [1], in which the peel strength y at 25°C is 0.07 N/cm or more.
[3] The lithium secondary battery according to [1] or [2], in which the peel strength x and the peel strength y satisfy y > 0.1 + 0.5x.
[4] The lithium secondary battery according to any one of [1] to [3], in which the resin layer contains polypropylene, and
   the metal layer contains copper.
[5] The lithium secondary battery according to any one of [1] to [4], in which the adhesive layer contains polyvinylidene fluoride.
[6] The lithium secondary battery according to any one of [1] to [5], in which a peel strength z between the negative-electrode active material layer and the metal layer at 25°C, the peel strength x at 25°C, and the peel strength y at 25°C satisfy x < y < (z/2).
[7] The lithium secondary battery according to any one of [1] to [6], in which the peel strength x at 25°C is 0.09 N/cm or more.
[8] The lithium secondary battery according to [6] or [7], in which the peel strength z at 25°C is 0.30 N/cm or more.
[9] The lithium secondary battery according to any one of [1] to [8], in which a laminate in which a plurality of sets of the positive electrode, the separator, and the negative electrode are laminated is provided.
[10] The lithium secondary battery according to any one of [1] to [9], in which the metal layer includes a vapor deposition layer provided on the resin layer and a plating layer provided on the vapor deposition layer.
[11] A method for manufacturing a lithium secondary battery, including: a negative electrode current collector preparation step of preparing a negative electrode current collector including a resin layer and metal layers provided on both surfaces of the resin layer;
   a negative electrode production step of producing a negative electrode by forming a negative-electrode active material layer on the negative electrode current collector;
   a laminate production step of producing a laminate by disposing the negative electrode, a positive electrode, and a separator so that the negative-electrode active material layer faces the positive electrode with the separator including an adhesive layer and being interposed between the negative-electrode active material layer and the positive electrode, and the adhesive layer is adjacent to the negative-electrode active material layer; and
   a heat press step of pressurizing the laminate while heating the laminate, in which in the lithium secondary battery,
   a peel strength x between the resin layer and the metal layer at 25°C is 0.05 N/cm or more, and
   a peel strength y between the negative-electrode active material layer and the separator at 25°C satisfies x < y.
[12] The method for manufacturing a lithium secondary battery according to [11], in which in the negative electrode current collector preparation step, the negative electrode current collector is produced by subjecting both the surfaces of the resin layer to vapor deposition with a metal and then plating to provide the metal layer on both surfaces of the resin layer.

### Industrial Applicability

The lithium secondary battery according to the present invention is industrially applicable as a power storage device used for various use applications, since the lithium secondary battery achieves all of weight reduction, cost reduction, and a favorable capacity retention rate.

### Reference Signs List

100: lithium secondary battery
110: positive electrode
111: positive electrode current collector
112: positive-electrode active material layer
120: negative electrode
121: negative electrode current collector
121a: metal layer
121b: resin layer
122: negative-electrode active material layer
130: separator
131: adhesive layer
132: separator body

## Claims

1. A lithium secondary battery comprising:
a positive electrode;
a separator; and
a negative electrode including a negative electrode current collector and a negative-electrode active material layer on the negative electrode current collector,
wherein the negative electrode current collector includes a resin layer and metal layers provided on both surfaces of the resin layer,
the negative-electrode active material layer faces the positive electrode with the separator being interposed between the negative-electrode active material layer and the positive electrode, the separator includes an adhesive layer on a surface on a side of the negative electrode,
a peel strength x between the resin layer and the metal layer at 25°C is 0.05 N/cm or more, and
a peel strength y between the negative-electrode active material layer and the separator at 25°C satisfies x < y.

2. The lithium secondary battery according to Claim 1,
wherein the peel strength y at 25°C is 0.07 N/cm or more.

3. The lithium secondary battery according to Claim 1,
wherein the peel strength x and the peel strength y satisfy y > 0.1 + 0.5x.

4. The lithium secondary battery according to Claim 1,
wherein the resin layer contains polypropylene, and
the metal layer contains copper.

5. The lithium secondary battery according to Claim 1,
wherein the adhesive layer contains polyvinylidene fluoride.

6. The lithium secondary battery according to Claim 1,
wherein a peel strength z between the negative-electrode active material layer and the metal layer at 25°C, the peel strength x at 25°C, and the peel strength y at 25°C satisfy x < y < (z/2).

7. The lithium secondary battery according to Claim 6,
wherein the peel strength x at 25°C is 0.09 N/cm or more.

8. The lithium secondary battery according to Claim 6,
wherein the peel strength z at 25°C is 0.30 N/cm or more.

9. The lithium secondary battery according to Claim 1,
wherein a laminate in which a plurality of sets of the positive electrode, the separator, and the negative electrode are laminated is provided.

10. The lithium secondary battery according to Claim 1,
wherein the metal layer includes a vapor deposition layer provided on the resin layer and a plating layer provided on the vapor deposition layer.

11. A method for manufacturing a lithium secondary battery, comprising:
a negative electrode current collector preparation step of preparing a negative electrode current collector including a resin layer and metal layers provided on both surfaces of the resin layer;
a negative electrode production step of producing a negative electrode by forming a negative-electrode active material layer on the negative electrode current collector;
a laminate production step of producing a laminate by disposing the negative electrode, a positive electrode, and a separator so that the negative-electrode active material layer faces the positive electrode with the separator including an adhesive layer and being interposed between the negative-electrode active material layer and the positive electrode, and the adhesive layer is adjacent to the negative-electrode active material layer; and
a heat press step of pressurizing the laminate while heating the laminate,
wherein in the lithium secondary battery,
a peel strength x between the resin layer and the metal layer at 25°C is 0.05 N/cm or more, and
a peel strength y between the negative-electrode active material layer and the separator at 25°C satisfies x < y.

12. The method for manufacturing a lithium secondary battery according to Claim 11,
wherein in the negative electrode current collector preparation step, the negative electrode current collector is produced by subjecting both the surfaces of the resin layer to vapor deposition with a metal and then plating to provide the metal layers on both surfaces of the resin layer.
